# NEUE EUROPÄISCHE PATENTSCHRIFT

(11) **EP 0 273 154 B2**
(45) Veröffentlichungstag und Bekanntmachung des Hinweises auf die Entscheidung über den Einspruch: **28.09.1994**
(45) Hinweis auf die Patenterteilung: 31.01.1990
(21) Anmeldenummer: 87116449.7
(22) Anmeldetag: 06.11.1987
(51) Int. Cl.: A22B 7/00

(54) **Verfahren und Vorrichtung zum Zwischenspeichern von Schlachttierkörpern in einem Kühlraum**
Method and apparatus for the intermediate storage of animal carcases in a cold room
Procédé et appareillage pour l'entreposage des carcasses d'animaux abatus dans une chambre froide

(30) Priorität: 21.11.1986 DE 3639768
(43) Veröffentlichungstag der Anmeldung: 06.07.1988
(73) Patentinhaber: Riniker AG Maschinenfabrik, CH-5102 Rupperswil (CH)
(72) Erfinder: Richner, Norbert, CH-5502 Hunzenschwil (CH)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- DE-B- 1 237 008
- DE-C- 237 907
- US-A- 3 089 432

## Beschreibung

Die Erfindung betrifft ein Verfahren zum Zwischenspeichern von Schlachttierkörpern, Teilen solcher Körper und/oder Fleischstücken in einem Kühlraum, bei dem die an Haken hängenden Tierkörper und/oder -teile von einer Einförder-Rohrbahn über steuerbare Eingangsweichen auf im Kühlraum parallel zueinander angeordnete Stapelgeleise überführt, längs des jeweiligen Stapelgeleises mittels eines Förderers bewegt und durch diesen Förderer bei Abruf aus dem Kühlraum über eine jedem Stapelgeleise zugeordnete steuerbare Ausgangsweiche einer Ausförder-Rohrbahn zugeführt werden. Ferner ist die Erfindung auf eine Vorrichtung zur Durchführung dieses Verfahrens gerichtet.

Es sind Rohrbahnanlagen für Kühlräume bekannt, bei denen eine Vielzahl nebeneinander angeordnetet Stapelgeleise über eine Einförder-Rohrbahn automatisch oder manuell über Weichen mit an Förderhaken hängenden Schlachttieren, Schlachttierhälften und Tierteilen beschickt werden kann.

Die Stapelgeleise können dabei nacheinander befüllt werden, aber es ist auch möglich, eine sortierte Stapelung dergestalt vorzunehmen, daß beispielsweise bestimmte Qualitäten ausschließlich bestimmten Stapelgeleisen zugeführt werden.

Neben einer Einförder-Rohrbahn ist den Stapelgeleisen auch eine wiederum über Weichen anfahrbare Ausförder-Rohrbahn zugeordnet. Bei der Ausförderung zwischen gespeicherten Tierkörpern bzw. Tierkörperhälften oder Tierkörperteilen wird nicht stets der gesamte Kühlraum geleert, sondern es sind vielmehr differenzierte Teilleerungen die Regel. Dabei ergeben sich bei den bekannten Anlagen, die üblicherweise mit Schubstangenförderern arbeiten, zwischen den bereits zwischengespeicherten Schlachttierkörpern und den neu zugeführten Schlachttierkörpern oft in einzelnen Stapelgeleisen teilweise erhebliche Speichertücken. Diese sich im Hinblick auf eine wirtschaftliche Nutzung des jeweiligen Kühlraums ausgesprochen ungünstig auswirkenden Speicherlücken treten mit zunehmender Spezifizierung des Stapelgeleisezuordnung besonders störend in Erscheinung.

Aufgabe der Erfindung ist es, ein Verfahren der eingangs angegebenen Art in der Weise auszubilden, daß auch bei stark differenzierter Sortierung in der Stapelung die jeweils vorhandene Kühlraum-Speicherkapazität optimal ausgenutzt werden kann und diese Optimalnutzung auch bei praktisch vollautomatischem Betrieb gewährleistet werden kann.

Gelöst wird diese Aufgabe nach der Erfindung im wesentlichen dadurch, daß die Ansteuerung der Eingangs- und Ausgangsweichen der Stapelgeleise individuell und in Abhängigkeit von sich auf das jeweils zwischenzuspeichernde Stück beziehenden Kenndaten zentral vorgenommen wird und daß jeder einem Stapelgeleise zugeordnete Förderer in der Weise angesteuert und betätigt wird, daß zwischen der Beendigung eines jeden Ausfördervorgangs und dem nächsten Vorgang des Einförderns auf das betreffende Stapelgeleise eine unter Mitnahme aller sich auf dem Stapelgeleise befindenden Stücke erfolgende Rückförderbewegung solcher Größe ausgeführt wird, daß beim nächsten Einfördervorgang ein lückenloser Stapelanschluß erhalten wird.

Von wesentlicher Bedeutung für die nach der Erfindung erzielbare lückenlose Stapelung auf den einzelnen Stapelgeleisen ist demgemäß die nach einem Ausfördervorgang sofort, verzögert oder zumindest vor einem erneuten Einfördervorgang vorzunehmende Rückforderung, die auch bei stark klassifizierter Zwischenspeicherung eine praktisch 100 %ige Raumausnutzung erbringt. Die durch die Erfindung ermöglichte Kühlraumaus nutzung führt in der Praxis auch zu einer bedeutsamen Raumeinsparung und zu einer unter wirtschaftlichen Aspekten wesentlichen Reduzierung der für die Kühlung benötigten Energie.

Durch die in Abhängigkeit von vor der Einspeicherung festgelegten Kenndaten erfolgende Sortierung und Stapelung wird es möglich, dem zur Bedinung der Anlage erforderlichen Personal den ungesunden Wechsel zwischen warmen und kalten Räumen weitestgehend zu ersparen, da nach dem Verfahren gemäß der Erfindung eine Anlage vollautomatisch betrieben werden kann. Diese durch die ständige Aktualisierung der Positionsdaten ermöglichte vollautomatische Betriebsweise erleichtert und beschleunigt die differenzierte Auslieferung an Kunden und an eigene Betriebsstätten bei minimalem Personaleinsatz, wobei die von Bedienungspersonen zu erledigenden Arbeiten sich weitgehend auf Steuer- und Überwachungsaufgaben beschränken.

Bei der praktischen Realisierung einer Vorrichtung zur Durchführung des Verfahrens nach der Erfindung werden als Förderer für die Stapelgeleise vorzugsweise Kettenförderer verwendet, die in ihrer Drehrichtung umsteuerbar sind und auch in beiden Richtungen unter Mitnahme aller sich auf dem Stapelgeleise befindenden Stücke Förderfunktion besitzen.

Derartige Kettenförderer werden über Elektromotore angetrieben, wodurch sich im Vergleich zu den bekannten pneumatischen Antrieben für Schubstangen die Vorteile ergeben, daß zum einen die bei Druckluftanlagen gegebene Lärmbelästigung beseitigt wird und zum anderen vor allem keinerlei Ölaustritt in die Umgebungsluft und damit eine eventuelle Ablagerung auf dem geförderten Fleisch erfolgt. Im Vergleich zu den bekannten pneumatischen Schubstangenantrieben läßt sich überdies auch eine Einsparung an Antriebsenergie erzielen.

Um einen selektiven Abruf von Fleischstücken auch von solchen Stapelgeleisen zu ermöglichen, auf denen gegebenenfalls gemischte Qualitäten gestapelt worden sind, wie dies beispielsweise gegen Ende eines größeren Einförderungsvorgangs der Fall sein kann, ist zwischen der Ausförder-Rohrbahn und der Einförder-Rohrbahn eine Rückführ-Rohrbahn vorgesehen, die es gestattet, einzelne Stücke, die noch nicht ausgefördert werden sollen, nach Art eines Karussells zurückzuführen und auf diese Weise die Ausförderung aus Stapelgeleisen in beliebiger Reihenfolge vorzunehmen.

Weitere vorteilhafte Ausgestaltungen der Erfindung und weitere vorteilhafte Merkmale der Erfindung sind in den Unteransprüchen angegeben.

Die Erfindung wird nachfolgend unter Bezugnahme auf die Zeichnung beispielsweise erläutert; in der Zeichnung zeigt:
Fig. 1 eine schematische Teil-Darstellung einer Kühlraum-Rohrbahnanlage,
Fig. 2 eine schematische Seitenansicht eines Stapelgeleises mit Kettenförderer für eine Anlage nach Fig. 1, und
Fig. 3 eine schematische Schnittdarstellung zur Erläuterung des Aufbaus des Kettenförderers nach Fig. 2.

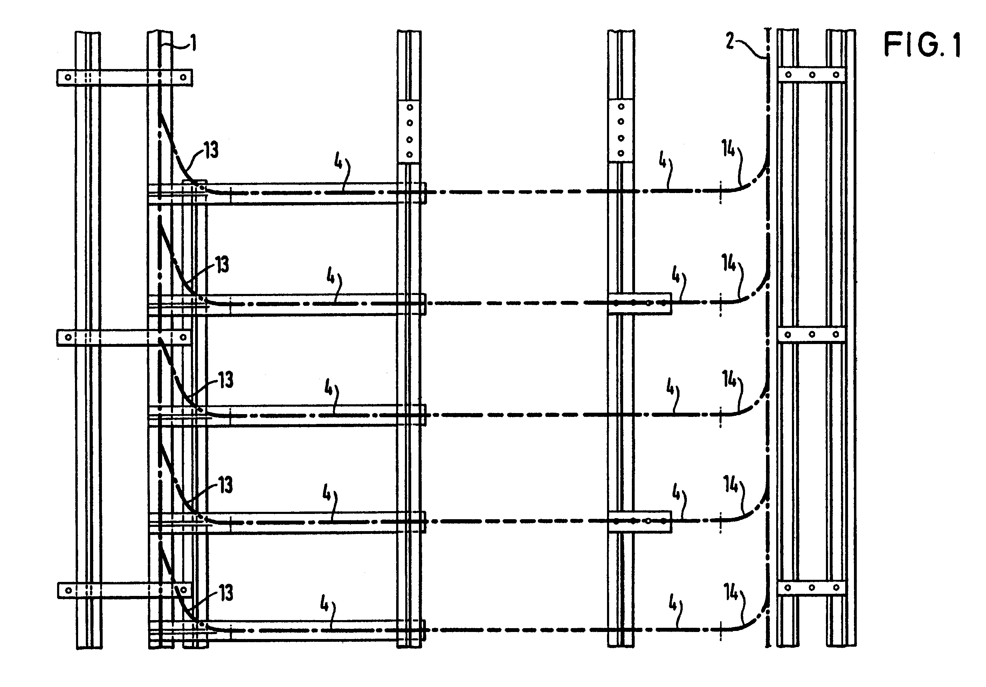

Fig. 1 zeigt eine über entsprechende Träger deckenseitig in einem Kühlraum montierte Rohrbahnanlage auschnittsweise in schematischer Darstellung.

Eine derartige Anlage umfaßt eine Vielzahl von parallel zueinander angeordneten Stapelgeleisen 4, denen gemeinsam jeweils eine Einförder-Rohrbahn 1 und eine Ausförder-Rohrbahn 2 zugeordnet ist. Zwischen jedem Stapelgeleise 4 und der Einförder- Rohrbahn 1 befindet sich eine steuerbare Weiche 13, und in entsprechender Weise ist zwischen jedem Stapelgeleise 4 und der Ausförder-Rohrbahn 2 eine Weiche 14 vorgesehen. Durch eine entsprechende Steuerung dieser Weichen 13 bzw. 14 ist es möglich, die Stapelgeleise 4 gezielt zu beschikken bzw. zu entleeren. Die Weichen sind von bekannter Konstruktion und können beispielsweise elektrisch oder pneumatisch betätigt werden.

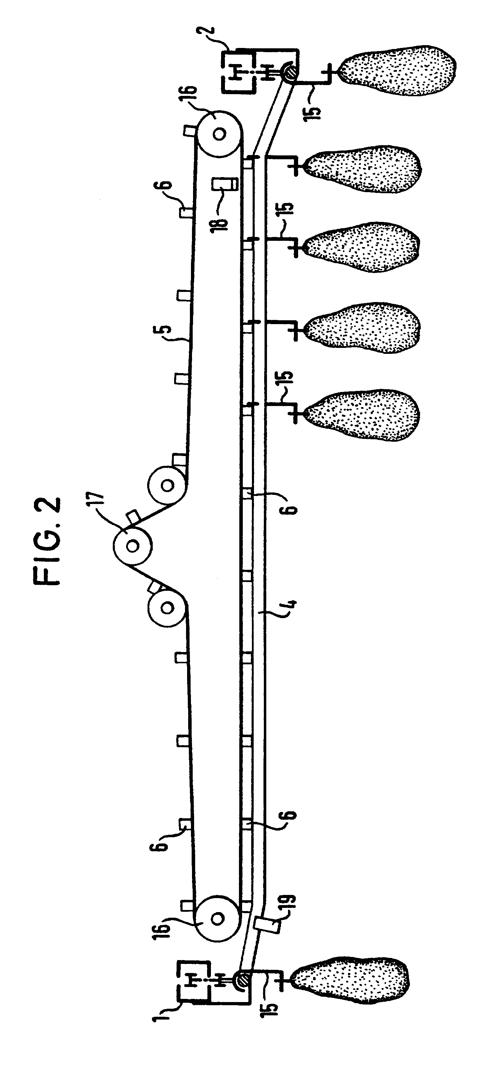

Fig. 2 zeigt ein Beispiel eines sich zwischen einer EinförderRohrbahn 1 und einer Ausförder-Rohrbahn 2 erstreckenden Stapelgeleises 4 mit zugehörigem Förderer 5.

Als Förderer 5 ist ein Kettenförderer vorgesehen, der eine Vielzahl von fest an den Kettengliedern angebrachten Mitnehmern 6 aufweist. Der Förderer 5 ist über einen im Bereich des Rückführtrums etwa mittig angebrachten Elektromotor 17 angetrieben, wobei es sich bei diesem Motor um einen in der Drehrichtung umsteuerbaren Motor handelt, so daß der Förderer sowohl im Vorlauf als auch im Rücklauf antreibbar ist.

Die Mitnehmer 6 des Förderers 5 greifen in Abhängigkeit von der Laufrichtung des Förderers an der einen oder anderen Seite von sich auf dem Stapelgeleise 4 befindenden Haken 15 an und bewegen auf diese Weise diese Haken 15 mit den daran hängenden Fleischstücken in Richtung der Ausförder-Rohrbahn 2 oder im Rücklauf zurück in Richtung der Einförder-Rohrbahn 1.

In dem dargestellten Beispiel ist im Bereich des ausförderseitig gelegenen Umlenkorgans 16 für den Förderer 5 ein Ausgangszähler 18 vorgesehen, der es ermöglicht, die jeweilige Anzahl der während eines Ausfördervorgangs vom Stapelgeleise 4 auf die Ausförder-Rohrbahn 2 übergebenen Fleischstücke zu ermitteln.

Im Bereich des einförderseitig gelegenen Umlenkorgans 16 ist ein Endschalter 19 angeordnet, der es gestattet, den jeweiligen Rückfördervorgang so zu beenden, daß einförderseitig ein lückenloses Beschicken des Stapelgeleises möglich wird.

In der Fig. 2 ist ein Ausfördervorgang dargestellt, der dazu führt, daß das betreffende Stapelgeleise 4 nur noch teilweise belegt ist. Es sei angenommen, daß die vier sich noch auf dem Stapelgeleise befindenden Fleischstücke zunächst nicht ausgefördert werden sollen. Ist dieser Teil-Ausfördervorgang beendet, so wird die Drehrichtung des Motors 17 umgesteuert, wodurch ein Wechsel der Angriffsstellen der Mitnehmer 6 an den Haken 15 eintritt und die nicht ausgeförderten Fleischstücke zur Einförderseite hin bewegt werden. Die Rückförderbewegung wird im dargestellten Ausführungsbeispiel durch den auf den Haken 15 ansprechenden Endschalter 19 beendet. Durch einen kurzen Vorwärtsantrieb des Förderers 5 wird dann sichergestellt, daß an dem Haken 15 wieder ein einen Transport in Ausförderrichtung gewährleistender Mitnehmer 6 zur Anlage kommt. Ist dieser Zustand erreicht, kann von der Einförder-Rohrbahn 1 ein neues Fleischstück dem Stapelgeleise 4 zugeführt werden, wobei sich zwischen den vorher bereits gestapelten Fleischstücken und dem neu hinzukommenden Fleischstück keinerlei Lückenbildung ergibt.

Anstelle der Verwendung eines Endschalters 19 kann gemäß einer Ausführungsvariante auch eine Zentralsteuerung der Rückförderbewegung vorgenommen werden, da eine eindeutige Positionsbestimmung der jeweiligen Fleischteile auch allein durch Auswertung der Zählvorgänge möglich ist.

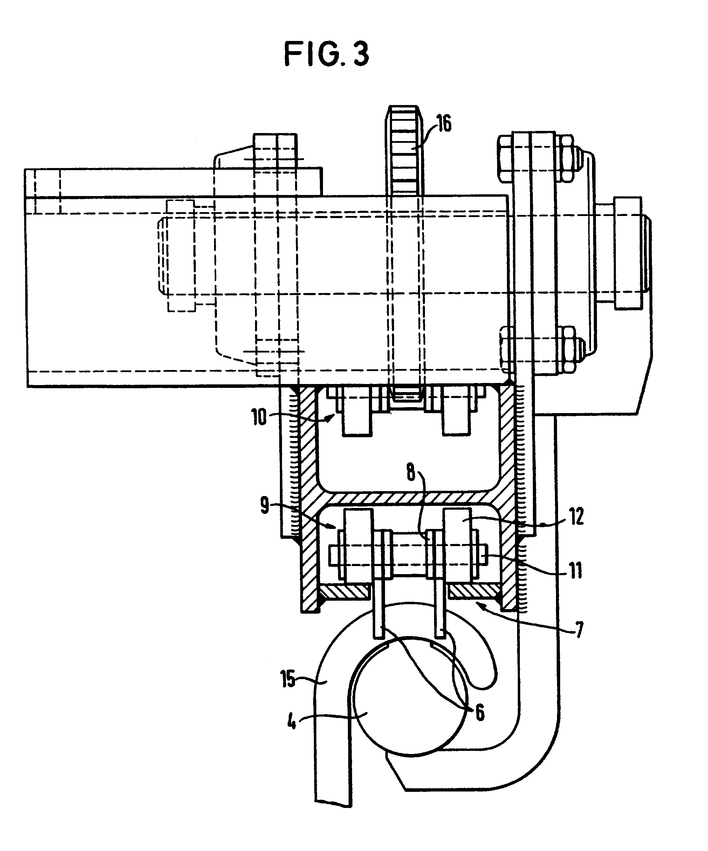

Die schematische Teil-Querschnittsdarstellung nach Fig. 3 zeigt ein Stapelgeleise 4 mit zugehörigem Förderer. Der Förderer besteht aus einer Endloskette, die zwischen zwei Umlenkgliedern 16 in der in Fig. 2 gezeigten Weise gespannt und durch einen Motor in beiden Richtungen antreibbar ist.

Das im wesentlichen zwischen Umlenkgliedern und Motor freihängend geführte Rücklauftrum der Hette ist in Fig. 3 mit 10 bezeichnet, während das Fördertrum das Bezugszeichen 9 besitzt.

Dieses Fördertrum 9 der Gliederkette läuft in einem Führungskanal 7, der an seiner dem Stapelgeleise 4 zugewandten Seite einen Längsschlitz aufweist, durch den sich die Mitnehmer 6 erstrekken, um an Haken 15 angreifen zu können, die auf dem Stapelgeleise 4 verschiebbar sind.

Die Mitnehmer 6 sind am jeweiligen Kettenglied 8 mittig befestigt. Zumindest an den mit Mitnehmern 6 versehenen Kettengliedern 8 sind an deren Verbindungsbolzen 11 Kunststoffgleiter 12 angebracht, deren Höhe nur geringfügig geringer ist als die Höhe des Führungskanals 7.

Auf diese Weise wird nicht nur die Förderkette im Führungskanal 7 auf den Kunststoffgleitern 12 geführt, sondern diese Kunststoffgleiter 12 nehmen auch die von den Mitnehmern 6 herrührenden Reaktionskräfte auf, wobei in Abhängigkeit von der Förderrichtung die entsprechende Abstützung der Gleiter 12 an der Boden- oder Deckenseite des Führungskanals 7 erfolgt.

Wesentlich für die Erfindung ist auch, daß je nach Art des Fördergutes auf den Fördergeleisen unterschiedliche Abstände gewählt werden können, um die Kühlraumbeschickung zu optimieren. So ist es ohne Schwierigkeiten möglich, die unterschiedlichen Abstände dadurch zu realisieren, daß die Belegungspositionen nicht jeweils unmittelbar benachbart gewählt, sondern gezielt jeweils eine Zwischenposition oder gegebenenfalls mehrere Zwischenpositionen freigehalten werden. Die Anzahl der Freiplätze wird dabei in Abhängigkeit von der Stückgröße gewählt, d.h. daß beispielsweise im Falle von Schinken jeder Aufhängeplatz gewählt werden kann, während bei Tierhälften entsprechende Zwischenplätze frei bleiben.

Bei der beschriebenen Fördervorrichtung handelt es sich um ein bevorzugtes Ausführungsbeispiel. Entsprechend dem jeweiligen Anwendungsfalle sind auch Abwandlungen möglich, denen jedoch gemeinsam sein muß, daß sowohl eine Vorwärts- als auch eine Rückwärtsförderung gegeben sein muß.

## Patentansprüche

1. Verfahren zum Zwischenspeichern von Schlachttierkörpern, Teilen solcher Körper und/oder Fleischstücken in einem Kühlraum, bei dem die an Haken hängenden Tierkörper und/oder -teile von einer Einförder-Rohrbahn über steuerbare Eingangsweichen auf im Kühlraum parallel zueinander angeordnete Stapelgeleise überführt, längs des jeweiligen Stapelgeleises mittels eines Förderers bewegt und durch diesen Förderer bei Abruf aus dem Kühlraum über eine jedem Stapelgeleise zugeordnete steuerbare Ausgangsweiche einer Ausförder-Rohrbahn zugeführt werden,
dadurch gekennzeichnet,
daß die Ansteuerung der Eingangs- und Ausgangsweichen der Stapelgeleise individuell und in Abhängigkeit von sich auf das jeweils zwischenzuspeichernde Stück beziehenden Kenndaten zentral vorgenommen wird und daß jeder einem Stapelgeleise zugeordnete Förderer in der Weise angesteuert und betätigt wird, daß zwischen der Beendigung eines jeden Ausfördervorgangs und dem nächsten Vorgang des Einförderns auf das betreffende Stapelgeleise eine unter Mitnahme aller sich auf dem Stapelgeleise befindenden Stücke erfolgende Rückförderbewegung solcher Größe ausgeführt wird, daß beim nächsten Einfördervorgang ein lückenloser Stapelanschluß erhalten wird.

2. Verfahren nach Anspruch 1, dadurch gekennzeichnet, daß die Rückförderbewegung unmittelbar nach Beendigung des jeweiliger Ausfördervorgangs durchgeführt wird.

3. Verfahren nach Anspruch 1, dadurch gekennzeichnet, daß die festen Kenndaten zusammen mit den zugehörigen Positionsdaten in einem zentralen Rechner gespeichert und die Positionsdaten während der Zwischenspeicherung in Abhängigkeit von den Bewegungen des Förderers aktualisiert werden.

4. Verfahren nach einem der vorhergehenden Ansprüche, dadurch gekennzeichnet, daß die Kenndaten ein die Fleischqualität kennzeichnendes Kriterium enthalten, und daß dieses Kriterium als Ansteuerkriterium für die Eingangsweichen verwendet wird.

5. Verfahren nach einem der vorhergehenden Ansprüche, dadurch gekennzeichnet, daß bei mehreren, jeweils einem Stapelkriterium zugeordneten, nebeneinander liegenden Stapelgeleisen zunächst die ungeradzahligen und dann die geradzahligen Stapelgeleise beschickt werden.

6. Vorrichtung zur Durchführung des Verfahrens nach einem oder mehreren der vorhergehenden Ansprüche, bestehend aus einer Einförder-Rohrbahn, einer Mehrzahl von parallel zueinander angeordneten, über steuerbare Eingangsweichen mit der Einförder-Rohrbahn verbindbaren Stapelgeleisen, jeweils einem Förderer für jedes Stapelgeleise und einer Ausförder-Rohrbahn, die wiederum über steuerbare Ausgangsweichen mit den Stapelgeleisen verbindbar ist,
dadurch gekennzeichnet,
daß die den Stapelgeleisen zugeordneten Förderer aus in ihrer Förderrichtung umsteuerbaren, in beiden Richtungen unter Mitnahme aller sich auf dem Stapelgeleise befindenden Stükke wirksamen Förderern (5) bestehen.

7. Vorrichtung nach Anspruch 6, dadurch gekennzeichnet, daß die Förderer (5) aus Kettenförderern bestehen.

8. Vorrichtung nach Anspruch 7, dadurch gekennzeichnet, daß die Anzahl der förderbereiten Mitnehmer (6) des Förderers (5) gleich der Anzahl der sich im Rücklauf befindenden Mitnehmer (6) ist.

9. Vorrichtung nach einem der Ansprüche 6 bis 8, dadurch gekennzeichnet, daß der Kettenförderer (5) entsprechend einer vertikalen Ebene verläuft.

10. Vorrichtung nach einem der Ansprüche 6 bis 8, dadurch gekennzeichnet, daß der Kettenförderer (5) entsprechend einer horizontalen Ebene verläuft.

11. Vorrichtung nach einem der Ansprüche 6 bis 10, dadurch gekennzeichnet, daß der Antrieb der Kettenförderer (5) im Bereich der Mitte des Rückführtrums der Kette gelegen ist.

12. Vorrichtung nach einem der Ansprüche 6 bis 11, dadurch gekennzeichnet, daß die Kette des Förderers (5) zumindest mit ihrem Fördertrum (9) in einem Kanal (7) geführt ist, aus dem die Mitnehmer (6) in Richtung des Stapelgeleises (4) vorstehen.

13. Vorrichtung nach Anspruch 12, dadurch gekennzeichnet, daß die Mitnehmer (6) bezüglich der einzelnen Kettenglieder (8) mittig angebracht sind.

14. Vorrichtung nach Anspruch 12 oder 13, dadurch gekennzeichnet, daß zumindest die mit Mitnehmern (6) versehenen Kettenglieder (8) an den ihnen zugeordneten Verbindungsbolzen (11) mit Kunststoffgleitern (12) oder Kunststoffrollen versehen sind, die beiseitig über die Kette vorstehen und Abstützelemente bezüglich des Führungskanals (7) bilden.

15. Vorrichtung nach einem oder mehreren der vorhergehenden Ansprüche, dadurch gekennzeichnet, daß zwischen der Ausförder-Rohrbahn (2) und der Einförder-Rohrbahn (1) eine Rückführ-Rohrbahn (3) vorgesehen ist.

## Claims

1. A method for the intermediate storage of animal carcasses, parts of such bodies and/or pieces of meat in a cold room in which the animal carcasses and/or parts are transferred hanging on hooks from an inward conveyor tube track via controllable input branches onto stacking rails arranged parallel to one another in the cold room, are moved along the respective stacking rails by means of a conveyor and, on being called up, are moved by this conveyor out of the cold room via a controllable output branch of an outward conveyor tube track associated with each stacking rail, characterized in that the controlling of the input and output branches of the stacking rails is effected individually and in dependence on characteristic data which relate to the respective piece which is to be subjected to intermediate storage; and in that each conveyor associated with a stacking rail is controlled and actuated in such a way that between the termination of each outward conveying process and the next process of inward conveyance onto the relevant stacking rail a return conveying movement is carried out while taking along all the pieces located on the stacking rail, with the return conveying movement being of such a size that a gapless stack connection is obtained during the next inward conveying process,

2. Method in accordance with claim 1, characterized in that the return conveying movement is carried out immediately after terminating the respective outward conveying process.

3. Method in accordance with claim 1, characterized in that the firm characteristic data is stored together with the associated position data in a central computer and the position is actualised during the intermediate storage in dependence on the movements of the conveyor.

4. Method in accordance with one of the preceding claims, characterized in that the characteristic data contains a criterion characteristic for the quality of the meat and in that this criterion is used as a control criterion for the input branches.

5. Method in accordance with one of the preceding claims, characterized in that with several adjacent stacking rails lying alongside one another, and with each stacking rail being associated with a stacking criterion, first the odd and then the even stacking rails are loaded.

6. Apparatus for carrying out the method of one or more of the preceding claims comprising an inward conveyor tube track, a plurality of stacking rails which are arranged parallel to one another and are connectable with the inward conveyor tube track via controllable input branches, a respective conveyor for each stacking rail and an outward conveyor tube track which is in turn connectable with the stacking rails via controllable output branches, characterized in that the conveyors associated with the stacking rails consist of conveyors of reversable conveying direction which are effective in both directions while moving along all pieces located on the stacking rail.

7. Apparatus in accordance with claim 6, characterized in that the conveyors (5) consist of chain conveyors,

8. Apparatus in accordance with claim 7, characterized in that the number of carriers (6) of the conveyor (5) which are ready for conveying is the same as the number of carriers (6) which are to be found in the return movement.

9. Apparatus in accordance with one of the claims 6 to 8, characterized in that the chain conveyors (5) extend in accordance with a vertical plane.

10. Apparatus in accordance with one of the claims 6 to 8, characterized in that the chain conveyors (5) extend in accordance with a horizontal plane.

11. Apparatus in accordance with one of the claims 6 to 10, characterized in that the drive for the chain conveyors (5) is disposed in the region of the centre of the return run of the chain.

12. Apparatus in accordance with one of the claims 6 to 11, characterized in that at the least the conveying run (9) of the chain of the conveyor (5) is guided in a channel (7) out of which the carriers (6) project in the direction of the stacking rail (4).

13. Apparatus in accordance with claim 12, characterized in that the carriers (6) are centrally mounted relative to the individual chain links (8).

14. Apparatus in accordance with claim 12 or claim 13, characterized in that at least the chain links (8) which are provided with carriers (6) are provided with plastic sliders (12) or plastic rollers at the connection pins which are associated therewith, with the plastic sliders or plastic rollers projecting on both sides beyond the chain and forming support elements relative to the guide channel (7).

15. Apparatus in accordance with one or more of the preceding claims, characterized in that a return guidance conveyor track (3) is provided between the outward conveyor tube track (2) and the inward conveyor tube track (1).

## Revendications

1. Procédé pour entreposer temporairement dans une chambre froide des carcasses d'animaux, des parties de ces carcasses et/ou des morceaux de viande, dans lequel les carcasses et/ou parties de carcasse, suspendues à des crochets, sont transférées, par l'intermédiaire d'aiguillages d'arrivée pilotables, d'une voie tubulaire d'arrivée sur des voies de stockage disposées parallèlement l'une à l'autre dans la chambre froide, sont déplacées le long de chaque voie de stockage au moyen d'un transporteur et, sur demande, sont amenées par ce transporteur hors de la chambre froide par l'intermédiaire d'un aiguillage de sortie, pilotable et correspondant à la voie de stockage respective, d'une voie tubulaire d'enlèvement,
caractérisé en ce que le pilotage des aiguillages d'arrivée et des aiguillages d'enlèvement des voies de stockage se fait de façon centralisée individuellement et en fonction de caractéristiques se rapportant à chaque morceau à entreposer, et en ce que chaque transporteur correspondant à une voie de stockage est piloté et manoeuvré de façon qu'entre la fin de chaque processus d'enlèvement et le processus d'arrivée suivant on effectue sur la voie de stockage en question une marche arrière en entraînant tous les morceaux qui se trouvent sur la voie de stockage sur une distance telle que lors du processus d'arrivée suivant, on obtienne un stockage continu sans vide.

2. Procédé selon la revendication 1, caractérisé en ce qu'on effectue la marche arrière immédiatement après la fin de chaque processus d'enlèvement.

3. Procède selon la revendication 1, caractérisé en ce que les caractéristiques fixes sont mémorisées dans un ordinateur central avec les données de position correspondantes, et en ce que les données de position sont actualisées pendant l'entreposage temporaire en fonction des mouvements du transporteur.

4. Procédé selon l'une des revendications précédentes, caractérisé en ce que les caractéristiques comprennent un critère caractérisant la qualité de la viande, et en ce que l'on emploie ce critère comme critère de pilotage des aiguillages d'arrivée.

5. Procédé selon l'une des revendications précédentes, caractérisé en ce que dans le cas où plusieurs voies de stockage situées l'une à côté de l'autre correspondent toutes à un critère de stockage, on alimente d'abord les voies de stockage de rang impair, puis celles de rang pair.

6. Appareil pour la mise en oeuvre du procédé selon l'une ou plusieurs des revendications précédentes, constitué d'une voie tubulaire d'arrivéc, de plusieurs voies de stockage qui sont disposées parallèlement l'une à l'autre et que l'on peut relier à la voie tubulaire d'arrivée par l'intermédiaire d'aiguillages d'arrivée pilotables, d'un transporteur particulier pour chaque voie de stockage, et d'une voie tubulaire d'enlèvement qu'à nouveau on peut relier aux voies de stockage par l'intermédiaire d'aiguillages d'enlèvement pilotables,
caractérisé en ce que les transporteurs correspondants aux voies de stockage sont constitués de transporteurs (5) dont on peut inverser le sens de déplacement et qui fonctionnent dans les deux sens avec réception de toutes les pièces se trouvant sur la voie de stockage.

7. Appareil selon la revendication 6, caractérisé en ce que les transporteurs (5) sont constitués de transporteurs à chaîne.

8. Appareil selon la revendication 7, caractérisé en ce que le nombre des entraîneurs (6) du transporteur (5) prêts au transport est égal au nombre des entraîneurs (6) qui se trouvent sur le brin de retour.

9. Appareil selon l'une des revendications 6 à 8, caractérisé en ce que le transporteur à chaîne (5) se déplace selon un plan vertical.

10. Appareil selon l'une des revendications 6 à 8, caractérisé en ce que le transporteur à chaîne (5) se déplace selon un plan horizontal.

11. Appareil selon l'une des revendications 6 à 10, caractérisé en ce que le mécanisme d'entraînement des transporteurs à chaîne (5) est situé dans la zone du milieu du brin de retour de la chaîne.

12. Appareil selon l'une des revendications 6 à 11, caractérisé en ce que la chaîne du transporteur (5) est guidée, au moins par son brin de transport (9), dans un canal (7) hors duquel les entraîneurs (6) font saillie en direction de la voie de stockage (4).

13. Appareil selon la revendication 12, caractérisé en ce que les entraîneurs (6) se rapportant aux maillons de chaîne (8) individuels sont fixés au centre de ceux-ci.

14. Appareil selon la revendication 12 ou 13, caractérisé en ce qu'au moins les maillons de chaîne (8) équipés d'entraîneurs (6) sont munis, sur leurs axes de liaison (11) correspondants, de coulisseaux en plastique (12) ou de galets en plastique qui font saillie de chaque côté de la chaîne et forment des éléments d'appui par rapport au canal de guidage (7).

15. Appareil selon une ou plusieurs des revendications précédentes, caractérisé en ce qu'une voie tubulaire de retour (3) est prévue entre la voie tubulaire d'enlèvement (2) et la voie tubulaire d'arrivée (1).
